# EUROPEAN PATENT APPLICATION

(11) **EP 4 738 077 A1**
(43) Date of publication of application: **06.05.2026**
(21) Application number: 24849355.3
(22) Date of filing: 12.06.2024
(51) Int. Cl.: G06F 3/041

(54) **ELECTRONIC DEVICE AND SCANNING METHOD FOR TOUCH SENSING OF DISPLAY IN ELECTRONIC DEVICE**

(30) Priority: 02.08.2023 KR 20230100881; 20.09.2023 KR 20230125835
(71) Applicant: Samsung Electronics Co., Ltd., Suwon-si, Gyeonggi-do 16677 (KR)
(72) Inventor: KIM, Taegun, Suwon-si, Gyeonggi-do 16677 (KR)
(74) Representative: Gulde & Partner
(86) International application number: PCT/KR2024/008021
(87) International publication number: WO 2025/028784

(57) **Abstract**

An electronic device according to an embodiment includes: a display including a touch sensor circuit and a pen input circuit; a memory; and a processor, wherein the memory may store instructions that are configured to cause, when executed, the processor to: identify a first palm position on the display through the touch sensor circuit, and identify a hover-in state by a pen device through the pen input circuit; identify a first position of the pen device, first tilt information of the pen device, and a first screen state of the display on the basis of the identification of the first palm position and the hover-in state; identify a first scan area in which a scan is to be performed by the touch sensor circuit and a first scan exclusion area in which a scan is not to be performed by the touch sensor circuit, on the basis of the first palm position, the first position of the pen device, the first tilt information, and the first screen state; and control the touch sensor circuit to perform a first partial scan such that a scan is performed on the first scan area but is not performed on the first scan exclusion area. Other embodiments may be included.

## Description

### [Technical Field]

Various embodiments of the disclosure relate to scanning for touch sensing of a display in an electronic device.

### [Background Art]

Recently, input devices such as touch input devices (e.g., touchscreens) or pen input devices (e.g., digitizers) have been widely incorporated and used for user interfaces in electronic devices.

A touchscreen may provide touch input signals through touch sensing, and touch sensing methods include, for example, resistive, capacitive, infrared, ultrasonic, and/or camera-based methods. The capacitive method can be widely applied to portable electronic devices such as smartphones and tablet PCs.

A digitizer may provide pen input signals via an electronic pen or a stylus pen. Pen recognition methods include pressure-sensitive, capacitive, passive, active, and electromagnetic resonance (EMR) or inductive methods.

### [Detailed Description of the Invention]

### [Technical Problem]

In an electronic device, a touch input operation and a pen input operation may be performed independently. The electronic device may scan the entire area of a touchscreen for touch sensing, and when a touch (e.g., a touch by a palm) is detected as a result of the scanning, the electronic device may perform a pen input recognition operation by a pen input device.

In an electronic device, when touch input operations by touch sensing and pen input operations by pen recognition are performed simultaneously, some touch inputs may be unnecessary inputs incidentally detected for pen input. For example, when a palm is placed on a touchscreen of an electronic device while writing or drawing with a pen, the electronic device may perform a scan of the entire area of the touchscreen, even though scanning of some areas of the touchscreen not associated with the pen input is unnecessary, thereby resulting in unnecessary power consumption.

An embodiment may provide an electronic device and a scanning method for touch sensing of a display in an electronic device, wherein when writing or drawing is performed with a pen while the palm is placed on the electronic device, the electronic device can identify a scan area and a scan exclusion area within the entire touchscreen area, and perform a partial scan in which scanning is performed only on the scan area, rather than a full scan, thereby reducing power consumption.

### [Technical Solution]

An electronic device according to an embodiment may include a display including a touch sensor circuit and a pen input circuit, memory configured to store instructions, and a processor. According to an embodiment, the instructions may, when executed by the processor, cause the electronic device to identify a first palm position on the display through the touch sensor circuit and identify a hover-in state by a pen device through the pen input circuit. According to an embodiment, the instructions may, when executed by the processor, cause the electronic device to identify a first position of the pen device, first tilt information of the pen device, and a first screen state of the display, based on the identification of the first palm position and the hover-in state. According to an embodiment, the instructions may, when executed by the processor, cause the electronic device to identify a first scan area to be scanned by the touch sensor circuit and a first scan exclusion area not to be scanned by the touch sensor circuit, based on the first palm position, the first position of the pen device, the first tilt information, and the first screen state. According to an embodiment, the instructions may, when executed by the processor, cause the electronic device to control the touch sensor circuit to perform a first partial scan in which the first scan area is scanned and the first scan exclusion area is not scanned.

According to an embodiment, a scanning method for touch sensing of a display in an electronic device may include identifying a first palm position on the display through a touch sensor circuit and identifying a hover-in state by a pen device through a pen input circuit. According to an embodiment, the method may include identifying a first position of the pen device, first tilt information of the pen device, and a first screen state of the display, based on the identification of the first palm position and the hover-in state. According to an embodiment, the method may include identifying a first scan area and a first scan exclusion area within a scan area to be scanned by the touch sensor circuit, based on the first palm position, the first position of the pen device, the first tilt information, and the first screen state. According to an embodiment, the method may include performing, through the touch sensor circuit, a first partial scan in which the first scan area is scanned and the first scan exclusion area is not scanned..

According to an embodiment, a non-transitory storage medium may store instructions that are configured to, when executed by an electronic device, cause the electronic device to perform at least one operation, wherein the at least one operation may include identifying a first palm position on a display through a touch sensor circuit and identifying a hover-in state by a pen device through a pen input circuit. According to an embodiment, the at least one operation may include identifying a first position of the pen device, first tilt information of the pen device, and a first screen state of the display, based on the identification of the first palm position and the hover-in state. According to an embodiment, the at least one operation may include identifying a first scan area and a first scan exclusion area from a scan area to be scanned by the touch sensor circuit, based on the first palm position, the first position of the pen device, the first tilt information, and the first screen state. According to an embodiment, the at least one operation may include performing, through the touch sensor circuit, a first partial scan in which the first scan area is scanned and the first scan exclusion area is not scanned.

### [Advantageous Effects]

According to embodiments of the disclosure, when writing or drawing is performed with a pen while the palm is placed on an electronic device, the electronic device may identify a scan area and a scan exclusion area within the entire touchscreen area, and perform a partial scan in which scanning is performed only on the scan area, rather than a full scan, thereby reducing power consumption

### [Brief Description of Drawings]

FIG. 1 is a block diagram of an electronic device within a network environment according to an embodiment.
FIG. 2 illustrates an electronic device and a pen device according to an embodiment.
FIG. 3 is a block diagram of an electronic device according to an embodiment.
FIG. 4 illustrates full scan and partial scan operation procedures in an electronic device according to an embodiment.
FIG. 5 is a flowchart illustrating a scanning operation for touch sensing of a display in the electronic device according to an embodiment.
FIG. 6 illustrates a palm position and the position of a pen device on a display screen in the electronic device according to an embodiment.
FIG. 7A illustrates tilt information of a pen device in an electronic device according to an embodiment.
FIG. 7B illustrates a case in which a pen device has vertically approached an electronic device according to an embodiment.
FIG. 7C illustrates a case in which a pen device has approached an electronic device while being tilted to the left according to an embodiment.
FIG. 8 illustrates a landscape state and a portrait state of a display according to an embodiment.
FIG. 9A illustrates a scan area and a scan exclusion area when a user writes with the right hand while a display is in a landscape state according to an embodiment.
FIG. 9B illustrates a scan area and a scan exclusion area when a user writes with the left hand while a display is in a landscape state according to an embodiment.
FIG. 10A illustrates a scan area and a scan exclusion area when a user writes with the right hand while a display is in a portrait state according to an embodiment.
FIG. 10B illustrates a scan area and a scan exclusion area when a user writes with the left hand while a display is in a portrait state according to an embodiment.

### [Mode for Carrying out the Invention]

Hereinafter, an electronic device according to various embodiments will be described with reference to the accompanying drawings. The term "user" used in the various embodiments may refer to a person using the electronic device or a device (e.g., an artificial intelligence electronic device) using the electronic device.

The terms used herein are employed merely to describe specific embodiments and are not intended to limit the scope of other embodiments. Expressions in the singular may include expressions in the plural unless the context clearly indicates otherwise. All terms used herein, including technical or scientific terms, may have the same meaning as generally understood by those skilled in the art to which the disclosure pertains. Terms defined in commonly used dictionaries may be construed as having meanings the same as or similar to those understood in the context of the relevant technology, and unless explicitly defined herein, shall not be construed in an idealized or overly formal sense. In some cases, even terms defined herein shall not be construed as excluding embodiments of the disclosure.

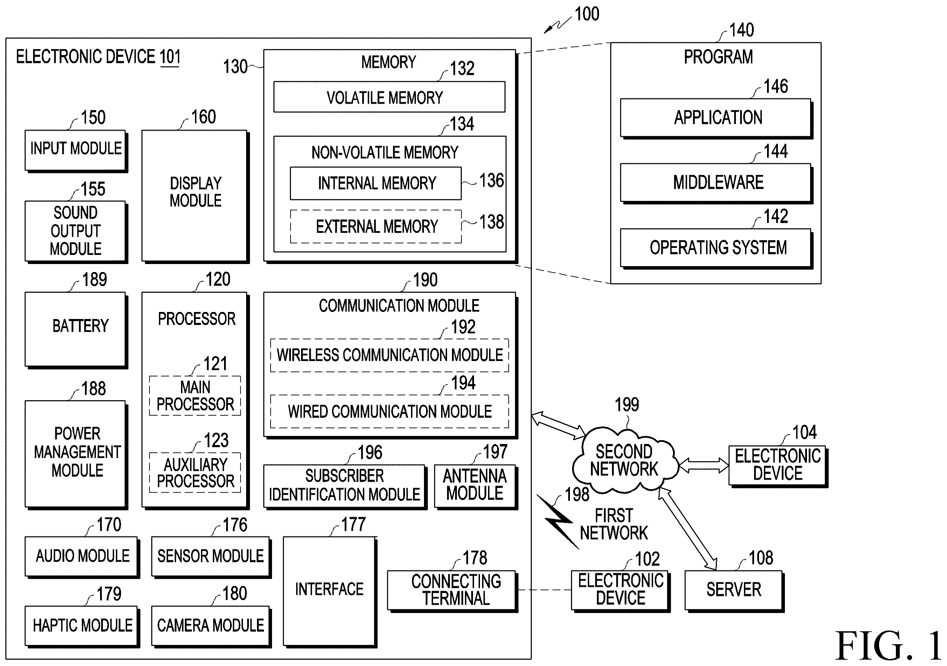

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device (e.g., the electronic device 101 of FIG. 1) according to an embodiment may have a structure of a wearable electronic device. According to an embodiment, the electronic device 101 may be a watch-type wearable device, and the electronic device 1001 according to an embodiment may be worn by a user. For example, the electronic device 101 may be a smart watch wearable on the wrist of a user.

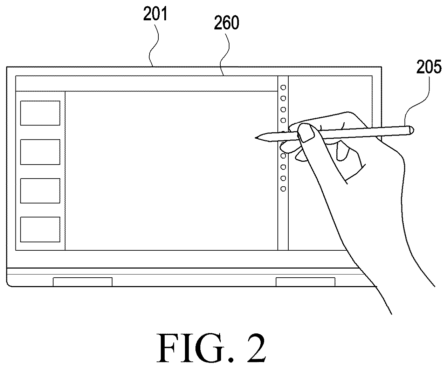

FIG. 2 is a diagram showing an electronic device 201 and a pen device 205 according to an embodiment.

Referring to FIG. 2, the electronic device 201 (e.g., the electronic device 101 in FIG. 1) according to an embodiment may include a display (e.g., a touchscreen display) 260. The display 260 according to an embodiment may include a touch sensor circuit (e.g., a touch sensing panel and a touch sensor IC) and a pen input circuit (e.g., a pen sensing panel and a pen recognition IC). The electronic device 201 according to an embodiment may independently identify a touch input and a pen input on the screen of the display 260. When touch input operations based on touch sensing and pen input operations based on pen input recognition are performed simultaneously through the display 260 (e.g., when a user places the palm on the display 260 while writing or drawing with the pen 205), the electronic device 201 according to an embodiment may identify a scan area and a scan exclusion area within the entire screen area of the display 260, and then cause the touch sensor circuit to perform scanning on the scan area and not on the scan exclusion area.

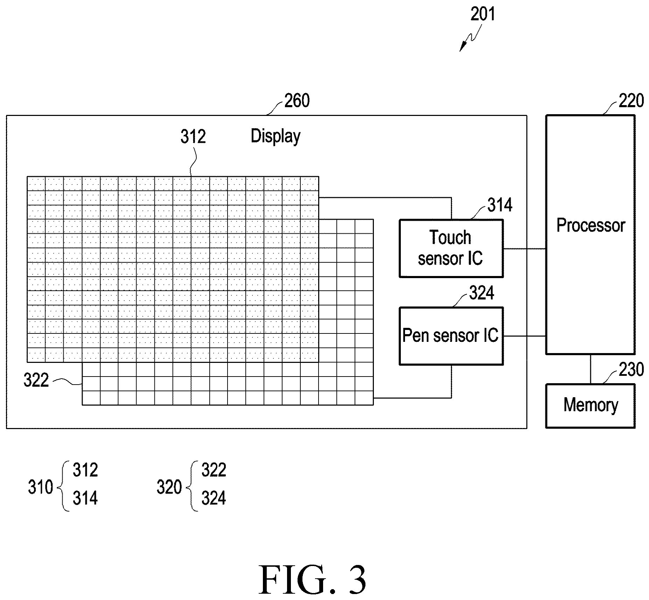

FIG. 3 is a block diagram of an electronic device according to an embodiment.

Referring to FIG. 3, an electronic device 201 (e.g., the electronic device 101 in FIG. 1) according to an embodiment may include a display 260 (e.g., the display module 160 in FIG. 1), a processor 220, and memory 230. The electronic device 201 according to an embodiment is not limited thereto, and may be configured to further include various components, or to exclude some of the described components. The electronic device 201 according to an embodiment may further include all or part of the electronic device 101 shown in FIG. 1.

The display 260 according to an embodiment may include a screen window (not shown), a touch panel (or capacitive touch panel) 312, a display panel (or display panel) (not shown), a pen recognition panel (or digitizer pad) 322, a touch sensor IC 314, and a pen recognition IC 324. The display 260 according to an embodiment may further include a drive circuit (not shown) that controls the display panel to output an image through the display panel.

According to an embodiment, the screen window (or cover window) may provide a contact surface capable of receiving external inputs, such as touch or hovering input from an external pen device 205, or touch input from a conductor (e.g., a palm). For example, the screen window may be glass treated with a reinforced coating or an oleophobic coating, and may also be formed using at least one of alumina, silica, and sapphire materials. The screen window according to an embodiment may be made of a transparent material, and may be attached to the touch panel 312 using an adhesive or fixed to a body forming the exterior of the electronic device 201.

According to an embodiment, the touch panel 312 may include electrode lines formed alternately in parallel and including multiple electrodes (e.g., TX (transmission) electrodes and RX (reception) electrodes) (not shown), and may receive a voltage applied from the touch sensor IC 314 to form an electric field for touch sensing through the multiple electrodes. The touch panel 312 according to an embodiment may cause a change in capacitance due to touch (or pressure) from a conductor (e.g., a palm).

The touch sensing IC 314 according to an embodiment may control the electrode lines of the touch panel 312 to be supplied with voltage and may scan the reception electrodes of the touch panel 312 to acquire a charge amount that varies according to contact (e.g., touch) from the pen device 205 or the conductor (e.g., a palm). During a full scan, the touch sensing IC 314 according to an embodiment may supply voltage to all electrode lines of the touch panel 312 and scan all reception electrodes of the touch panel 312. During a partial scan, the touch sensing IC 314 according to an embodiment may supply voltage to some electrode lines in a partial area (scan area) among all electrode lines of the touch panel 312, while not supplying voltage to other electrode lines in other areas (scan exclusion areas) excluding the partial area, and may scan only the reception electrodes in the partial area (the scan area) of the touch panel 312. The touch sensing IC 314 according to an embodiment may provide the processor 220 with position information (e.g., coordinates (x, y)) of the pen device 205 or conductor (e.g., palm) detected based on the amount of charge acquired through a full scan or a partial scan of the reception electrodes.

The pen recognition panel 322 according to an embodiment may include a flexible printed circuit board (FPCB) including multiple overlapping loop antenna coils arranged in the x-axis and y-axis directions of the display screen. The pen recognition IC 324 according to an embodiment may supply an alternating current to the pen recognition panel 322 and control the pen recognition panel 322 to generate an electromagnetic field. The electromagnetic field generated by the pen recognition panel 322 according to an embodiment may affect the resonant circuit (not shown) of the pen device 205 as the pen device 205 contacts (e.g., touches) or approaches the electromagnetic field generated by the pen recognition panel 322. The electromagnetic field generated by the pen recognition panel 322 may induce a current in the resonant circuit of the pen device 205, and the current induced in the resonant circuit of the pen device 205 may also generate a magnetic field in the resonant circuit of the pen device 205. The pen recognition IC 324 according to an embodiment may scan the intensity of the magnetic field applied from the pen device 205 to the pen recognition panel 322 over a partial area or the entire area of the display screen to detect the position of the pen device 205 and provide the detected position information (e.g., coordinates (x, y)) to the processor 220.

The display panel (not shown) according to an embodiment may display a display screen. The display panel (not shown) according to an embodiment may display a display screen generated using pen input information produced from data information to be displayed on the display 260 and coordinate information of the pen device 205.

The touch sensor panel 312 and the touch sensor IC 314 according to an embodiment may be implemented as a touch sensor circuit 310 in which the touch sensor panel 312 and the touch sensor IC 314 are interconnected. The pen recognition panel 322 and the pen recognition IC 324 according to an embodiment may be implemented as a pen recognition circuit 320 in which the pen recognition panel 322 and the pen recognition IC 324 are interconnected.

The processor 220 (e.g., the processor 120 in FIG. 1) (or host) according to an embodiment may perform overall control operations of the electronic device 201. The processor 220 according to an embodiment may identify the position (e.g., a first palm position) of a conductive object (or a palm) on the display 260 via the touch sensor circuit 310. The processor 220 according to an embodiment may identify the position of the conductive object (or palm) (e.g., the first palm position), based on position information (e.g., coordinates (x, y)) of a conductor (e.g., palm) provided from the touch sensor IC 314. The processor 220 according to an embodiment may identify a hover-in state (e.g., an approach state) by the pen device 205 via the pen input circuit 320. The processor 220 according to an embodiment may identify the hover-in state (e.g., an approach state) and the position of the pen device 205, based on position information (e.g., coordinates (x, y)) of the pen device 205 provided from the pen recognition IC 324. The processor 220 according to an embodiment may identify the position (e.g., a first position) of the pen device 205, tilt information (e.g., first tilt information) of the pen device 205, and the screen state (e.g., a first screen state) of the display 260, based on the identification of the first palm position and the hover-in state.

According to an embodiment, the display screen state may include a landscape state or a portrait state. The processor 220 according to an embodiment may display the screen of the display 260 in a landscape state or a portrait state depending on the rotational state of the electronic device 201. When the display screen state is a landscape state, the processor 220 according to an embodiment may identify the leftward or rightward direction of the first position of the pen device 205 with respect to the x-axis of the display screen. When the display screen state is in portrait state, the processor 220 according to an embodiment may identify the leftward or rightward direction of the pen device with respect to the y-axis of the display screen. In the landscape state and the portrait state according to an embodiment, the landscape may become the portrait or the portrait may become the landscape, depending on the definition of the landscape and portrait of the display screen.

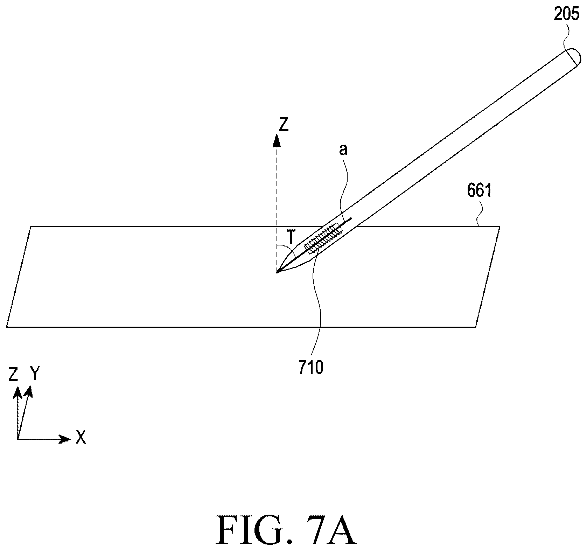

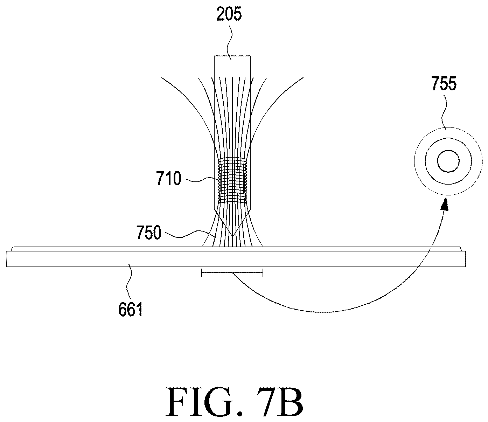

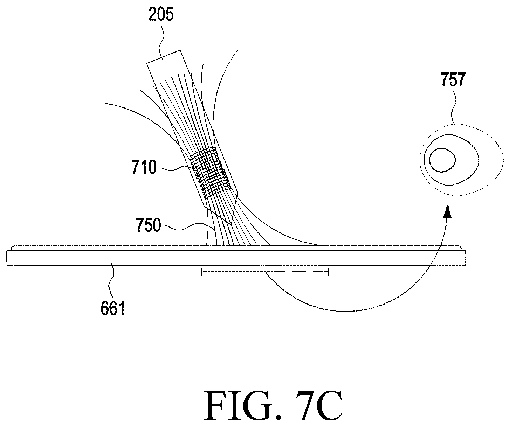

According to an embodiment, the tilt information of the pen device 205 may include the angle between a reference axis (hereinafter also referred to as the longitudinal axis) of the pen device 205 and the z-axis (or vertical axis) of the display screen (xy plane). The processor 220 according to an embodiment may acquire tilt information (e.g., first tilt information) based on the angle between the reference axis of the pen device 205 and the z-axis of the display screen (xy plane) at the first position on the display screen. For example, the first tilt information may be obtained by various methods, and in this disclosure, may be obtained based on the description in FIGS. 7A, 7B, and 7C that will be described later. For example, when the reference axis of the pen device 205 (or the longitudinal axis of the pen device 205), at the first position on the display screen, forms an angle of approximately 0 degrees with respect to the z-axis (or vertical axis) of the display (xy plane), the pen device 205 may be vertically hovered in (or in contact with) the display screen. According to an embodiment, when the angle between the reference axis of the pen device 205 and the z-axis (or vertical axis) of the display screen (xy plane) at the first position on the display screen falls within a first specified angle range (e.g., between approximately 0 degrees and approximately -90(or approximately +90 degrees)), the pen device 205 may be tilted to the right relative to the vertical direction (z-direction) of the display screen and be in a hovered-in (or in-contact) state. According to an embodiment, when the pen device 205 is tilted to the right relative to the vertical direction (e.g., z-axis) of the display screen and is in a hovered-in (or in-contact) state, the processor 220 may identify a right-hand mode in which writing is performed by the right hand. For example, when the angle between the reference axis of the pen device 205 and the z-axis (or vertical axis) of the display screen (xy plane) at the first position on the display screen falls within a second specified angle range (e.g., between approximately 0 degrees and +90 degrees(or -90)), the pen device 205 may be tilted to the left relative to the vertical direction (e.g., z-axis) of the display screen and be in a hovered-in (or in-contact) state. According to an embodiment, when the pen device 205 is tilted to the left relative to the vertical direction (e.g., z-axis) of the display screen and is in a hovered-in (or in-contact) state, the processor 220 may identify a left-hand mode in which writing is performed by the left hand.

According to an embodiment, the processor 220 may identify a first scan area, which is to be scanned by the touch sensing circuit 310, a first scan exclusion area, which is not to be scanned by the touch sensing circuit 310, based on the first palm position, the first position of the pen device 205, the first tilt information of the pen device 205, and the first screen state.

According to an embodiment, when the pen device 205 is at the first position while the first palm position is identified, and when the first tilt information of the pen device 205 indicates a right-tilted state while the screen state of the pen device 205 is a landscape state, the processor 220 may identify, as the first scan area, an area corresponding to the leftward direction of the first position of the pen device 205 relative to the x-axis of the display screen, and identify an area other than the first scan area as the first scan exclusion area. According to an embodiment, when the pen device 205 is at the first position while the first palm position is identified, and when the first tilt information of the pen device 205 indicates a left-tilted state while the screen state of the pen device 205 is a landscape state, the processor 220 may identify, as the first scan area, an area corresponding to the rightward direction of the first position of the pen device 205 relative to the x-axis of the display screen, and identify an area other than the first scan area as the first scan exclusion area. According to an embodiment, when the pen device 205 is at the first position while the first palm position is identified, and when the first tilt information of the pen device 205 indicates a right-tilted state while the screen state of the pen device 205 is a portrait state, the processor 220 may identify, as the first scan area, an area corresponding to the leftward direction of the first position of the pen device 205 relative to the y-axis of the display screen, and identify an area other than the first scan area as the first scan exclusion area. According to an embodiment, when the pen device 205 is at the first position while the first palm position is identified, and when the first tilt information of the pen device 205 indicates a left-tilted state while the screen state of the pen device 205 is a portrait state, the processor 220 may identify, as the first area, an area corresponding to the rightward direction of the first position of the pen device 205 relative to the y-axis of the display screen, and identify an area other than the first scan area as the first scan exclusion area.

Based on the identification of the first scan area and the first scan exclusion area, the processor 220 according to an embodiment may control the touch sensing circuit 310 to perform a first partial scan in which the touch sensing circuit scans the first scan area but does not scan the first scan exclusion area. The touch sensing circuit 310 according to an embodiment may provide specified power (or voltage or current) to electrodes corresponding to the first scan area among the electrodes of the touch sensor panel 312, and may not provide the specified power (or voltage or current) to electrodes corresponding to the first scan exclusion area.

According to an embodiment, the processor 220 may identify the movement of the pen device 205 from the first position to a second position. The processor 220 according to an embodiment may identify a second palm position, a second position of the pen device 205, second tilt information of the pen device 205, and a second screen state of the display 260, based on identifying the movement of the pen device 205 from the first position to the second position. According to an embodiment, the processor 220 may identify a second scan area, which is to be scanned by the touch sensing circuit 310, and a second scan exclusion area, which is not to be scanned by the pen input circuit 320, based on the second palm position, the second position of the pen device 205, the second tilt information of the pen device 205, and the second screen state. Based on the identification of the second scan area and the second scan exclusion area, the processor 220 according to an embodiment may control the touch sensing circuit 310 to perform a second partial scan in which the touch sensing circuit 310 scans the second scan area but does not scan the second scan exclusion area.

According to an embodiment, the processor 220 may control the touch sensing circuit 310 to perform a full scan, based on the identification of the hover-out state of the pen device 205.

The memory 230 (e.g., the memory 130 in FIG. 1) according to an embodiment may store various pieces of data used by at least one component (e.g., the processor 220 or the display 260) of the electronic device 201. The memory 230 according to an embodiment may store indicators representing each of multiple areas within the display screen. The memory 230 according to an embodiment may store instructions configured to cause the processor 220 to perform scanning operations for touch sensing of the display.

An electronic device (e.g., the electronic device 101 in FIG. 1 or the electronic device 201 in FIG. 2) according to an embodiment may include a display (e.g., the display 160 in FIG. 1 or the display 260 in FIG. 2) including a touch sensor circuit (e.g., the touch sensor circuit 310 in FIG. 3) and a pen input circuit (e.g., the touch sensor circuit 320 in FIG. 3), memory (e.g., the memory 130 in FIG. 1 or the memory 230 in FIG. 2) for storing instructions, and a processor (e.g., the processor 120 in FIG. 1 or the processor 220 in FIG. 2). According to an embodiment, when executed by the processor, the instructions may cause the electronic device to identify a first palm position on the display via the touch sensor circuit and to identify a hover-in state of a pen device via the pen input circuit. According to an embodiment, when executed by the processor, the instructions may cause the electronic device to identify a first position of the pen device, first tilt information of the pen device, and a first screen state of the display, based on the identification of the first palm position and the hover-in state. According to an embodiment, when executed by the processor, the instructions may cause the electronic device to identify a first scan area, which is to be scanned by the touch sensor circuit, and a first scan exclusion area, which is not to be scanned by the touch sensor circuit, based on the first palm position, the first position of the pen device, the first tilt information, and the first screen state. According to the embodiment, when executed by the processor, the instructions may cause the electronic device to control the touch sensor circuit to perform a first partial scan in which the touch sensor circuit scans the first scan area but does not scan the first scan exclusion area.

According to an implementation, when executed by the processor, the instructions may cause the electronic device to control the touch sensor circuit to perform a full scan, based on identifying the hover-out state of the pen device.

According to an embodiment, when executed by the processor, the instructions may cause the electronic device to identify a second palm position, a second position of the pen device, second tilt information of the pen device, and a second screen state of the display, based on identification of the movement of the pen device from the first position to the second position. According to an embodiment, when executed by the processor, the instructions may cause the electronic device to identify a second scan area, which is to be scanned by the touch sensor circuit, and a second scan exclusion area, which is not to be scanned by the touch sensor circuit, based on the second palm position, the second position of the pen device, the second tilt information, and the second screen state. According to an embodiment, when executed by the processor, the instructions may cause the electronic device to control the touch sensor circuit to perform a second partial scan in which the touch sensor scans the second scan area but does not scan the second scan exclusion area.

According an embodiment, the first scan exclusion area and the second scan exclusion area may be different areas.

According to an embodiment, the first display screen state may be a landscape state or a portrait state.

According to an embodiment, when executed by the processor, the instructions may cause the electronic device to identify a leftward or rightward direction of the first position of the pen device relative to the x-axis of a display screen when the first display screen state is the landscape state. According to an embodiment, when executed by the processor, the instructions may cause the electronic device to identify the leftward or rightward direction of the pen device relative to the y-axis of the display screen when the first display screen state is the portrait state.

According to an embodiment, the tilt information may include an angle between a reference axis of the pen device and the z-axis of the display screen.

According to an embodiment, when executed by the processor, the instructions may cause the electronic device to identify the first scan exclusion area based on the leftward direction of the first position of the pen device when the angle is within a first specified angle range. According to an embodiment, when executed by the processor, the instructions may cause the electronic device to identify the first scan exclusion area based on the rightward direction of the first position of the pen device when the angle is within a second specified angle range.

According to an embodiment, the memory may store indicators representing multiple areas within the display screen.

The instructions according to an embodiment, when executed by the processor, may cause the electronic device to transmit the first indicator corresponding to the first scan exclusion area among the area indicators to the touch sensor circuit.

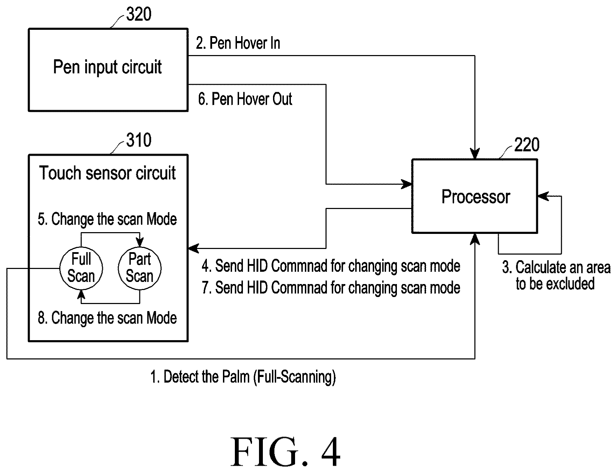

FIG. 4 illustrates full scan and partial scan operation procedures in an electronic device according to an embodiment.

Referring to FIG. 4, the touch sensor circuit 310 of the electronic device 201 (e.g., the electronic device 201 in FIG. 1) according to an embodiment may detect contact (e.g., touch) of a conductor (e.g., a palm) by performing a full scan of the reception electrodes of the touch panel 312. When a contact (e.g., a touch) of the conductor (e.g., the palm) is detected by performing a full scan of the reception electrodes of the touch panel 312, the touch sensor circuit 310 according to an embodiment may transmit position information (e.g., coordinates (x, y) or coordinates) of the conductor (e.g., the palm)(e.g., first palm position information) to the processor 220.

The pen recognition circuit 320 according to an embodiment may identify the hover-in state of the pen device 205 by scanning the intensity of a magnetic field applied from the pen device 205 to the pen recognition panel 322. The pen recognition circuit 320 according to an embodiment may detect the position of the pen device 205, based on identifying the hover-in state of the pen device 205, and provide the detected position (e.g., coordinates (x, y)) (e.g., a first position) of the pen device 205 to the processor 220 (2. Pen hover in).

Based on receiving a first palm position from the touch sensor circuit 310 and position information (e.g., a first position) of the pen device 205 from the pen recognition circuit 320, the processor 220 according to an embodiment may calculate (or identify), within the entire scan area, an area which is to be scanned by the touch sensing circuit 310 and a scan exclusion area which is not to be scanned by the touch sensing circuit 310 (3. Calculate an area to be excluded). For example, the processor 220 may identify, based on receiving palm position information from the touch sensor circuit 310 and position information of the pen device 205 from the pen recognition circuit 320, a first palm position, a first position of the pen device 205, first tilt information of the pen device 205, and a first screen state of the display 260, and, based on the first palm position, the first position of the pen device 205, the first tilt information of the pen device 205, and the first screen state, may identify a scan area to be scanned by the touch sensing circuit 310 and a scan exclusion area not to be scanned by the touch sensing circuit 310.

The processor 220 according to an embodiment may transmit, to the touch sensor circuit 310, a command to change the scan mode from a full scan mode to a partial scan mode. According to an embodiment, the processor 220 may transmit, to the touch sensor circuit 310, a command to change to the partial scan mode by using a USB human interface device (USB HID) class and an area indicator corresponding to the scan exclusion area (4. Send HID command for changing scan mode).

The touch sensor circuit 310 according to an embodiment may change the scan mode from the full scan mode to the partial scan mode, based on receiving the command from the processor 220, and perform a partial scan of the scan area excluding the scan exclusion area within the entire scan area (5. Change the scan mode).

The pen recognition circuit 320 according to an embodiment may identify the hover-out state of the pen device 205 by scanning the intensity of a magnetic field applied from the pen device 205 to the pen recognition panel 322. The pen recognition circuit 320 according to an embodiment may provide the hover-out state of the pen device 205 to the processor 220 (6. Pen hover out).

The processor 220 according to an embodiment may transmit, to the touch sensor circuit 310, a command to change the scan mode from the partial scan mode to the full scan mode, based on identifying the hover-out state of the pen device 205. The processor 220 according to an embodiment may transmit, to the touch sensor circuit 310, a command to change to the full scan mode by using the USB human interface device (USB HID) class (7. Send HID command for changing scan mode).

The touch sensor circuit 310 according to an embodiment may change the scan mode from the partial scan mode to the full scan mode, based on receiving the command from the processor 220, and perform a full scan of the entire scan area (8. Change the scan mode).

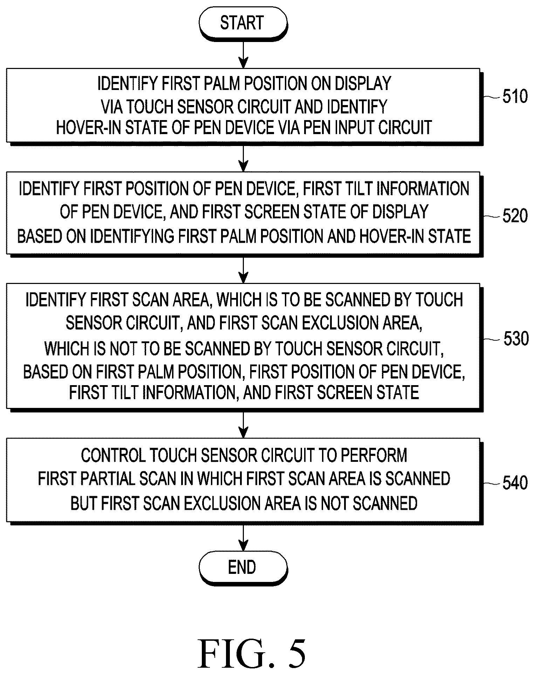

FIG. 5 is a flowchart illustrating a scanning operation for touch sensing of a display in an electronic device according to an embodiment.

Referring to FIG. 5, an electronic device (e.g., the electronic device 101 in FIG. 1 or the electronic device 201 in FIG. 2) (or the processor 120 in FIG. 1 or the processor 220 in FIG. 2) according to an embodiment may perform at least one operation among operations 510 to 540.

In operation 510, the processor 220 according to an embodiment may identify a position (e.g., a first palm position) of a conductive object (or a palm) on the display 260 via the touch sensor circuit 310 and identify a hover-in state (e.g., an approach state) caused by the pen device 205 via the pen input circuit 320.

In operation 520, the processor 220 according to an embodiment may identify a position (e.g., a first position) of the pen device 205, tilt information (e.g., first tilt information) of the pen device 205, and a screen state (e.g., a first screen state) of the display 260, based on the identification of the first palm position and the hover-in state.

According to an embodiment, the display screen state may include a landscape state or a portrait state. The processor 220 according to an embodiment may display a display 260 screen in the landscape state or the portrait state, depending on the rotational state of the electronic device 202. The processor 220 according to an embodiment may identify a leftward or rightward direction of the first position of the pen device 205 relative to the x-axis of the display screen when the display screen state is the landscape state. The processor 220 according to an embodiment may identify the leftward or rightward direction of the pen device relative to the y-axis of the display screen when the display screen state is the portrait state. In the landscape state and the portrait state according to an embodiment, the landscape may become the portrait or the portrait may become the landscape, depending on the definition of the landscape and portrait of the display screen.

According to an embodiment, the tilt information of the pen device 205 may include an angle between a reference axis of the pen device 205 and the z-axis of the display screen (xy plane). The processor 220 according to an embodiment may acquire the tilt information (e.g., the first tilt information) based on the angle between the reference axis of the pen device 205 and the z-axis of the display screen (xy plane) at the first position on the display screen. For example, the first tilt information may be obtained by various methods, and in the disclosure, may be obtained based on the description in FIGS. 7A, 7B, and 7C which will be described below.

For example, when the reference axis of the pen device 205 (or the longitudinal axis of the pen device 205) at the first position on the display screen forms an angle of approximately 0 degrees with the z-axis (or vertical axis) of the display (xy plane), the pen device 205 may be vertically hovered in (or in contact with) the display screen. According to an embodiment, when the angle between the reference axis of the pen device 205 and the z-axis (or vertical axis) of the display screen (xy plane) at the first position on the display screen is approximately 0 degrees to approximately -90 degrees (or approximately +90 degrees), the pen device 205 may be tilted to the right relative to the vertical direction (z-direction) of the display screen and be in a hovered-in (or in-contact) state. According to an embodiment, when the pen device 205 is tilted to the right relative to the vertical direction (e.g., z-axis) of the display screen and is in a hovered-in (or in-contact) state, the processor 220 may identify a right-hand mode in which writing is performed by the right hand. For example, when the angle between the reference axis of the pen device 205 and the z-axis (or vertical axis) of the display screen (xy plane) at the first position on the display screen is approximately 0 degrees to +90 degrees(or -90), the pen device 205 may be tilted to the left relative to the vertical direction (e.g., z-axis) of the display screen and be in a hovered-in (or in-contact) state. When the pen device 205 is tilted to the left relative to the vertical direction (e.g., z-axis) of the display screen and is in a hovered-in (or in-contact) state, the processor 220 according to an embodiment may identify a left-hand mode in which writing is performed by the left hand.

In operation 530, the processor 220 according to an embodiment may identify a first scan area, which is to be scanned by the touch sensing circuit 310, and a first scan exclusion area, which is not to be scanned by the touch sensing circuit 310, based on the first palm position, the first position of the pen device 205, the first tilt information of the pen device 205, and the first screen state.

According to an embodiment, when the pen device 205 is at the first position while the first palm position is identified, and when the first tilt information of the pen device 205 indicates a right-tilted state while the screen state of the pen device 205 is the landscape state, the processor 220 may identify, as the first scan area, an area corresponding to the leftward direction of the first position of the pen device 205 relative to the x-axis of the display screen, and identify an area other than the first scan area as the first scan exclusion area. According to an embodiment, when the pen device 205 is at the first position while the first palm position is identified, and when the first tilt information of the pen device 205 indicates a left-tilted state while the screen state of the pen device 205 is the landscape state, the processor 220 may identify, as the first scan area, an area corresponding to the rightward direction of the first position of the pen device 205 relative to the x-axis of the display screen, and identify an area other than the first scan area as the first scan exclusion area. According to an embodiment, when the pen device 205 is at the first position while the first palm position is identified, and when the first tilt information of the pen device 205 indicates a right-tilted state while the screen state of the pen device 205 is the portrait state, the processor 220 may identify, as the first scan area, an area corresponding to the leftward direction of the first position of the pen device 205 relative to the y-axis of the display screen, and identify an area other than the first scan area as the first scan exclusion area. According to an embodiment, when the pen device 205 is at the first position while the first palm position is identified, and when the first tilt information of the pen device 205 indicates a left-tilted state while the screen state of the pen device 205 is the portrait state, the processor 220 may identify, as the first area, an area corresponding to the rightward direction of the first position of the pen device 205 relative to the y-axis of the display screen, and identify an area other than the first scan area as the first scan exclusion area.

In operation 540, based on the identification of the first scan area and the first scan exclusion area, the processor 220 according to an embodiment may control the touch sensing circuit 310 to perform a first partial scan in which the touch sensing circuit scans the first scan area but does not scan the first scan exclusion area.

The processor 220 according to an embodiment may identify the movement of the pen device 205 from the first position to a second position during the first partial scan. The processor 220 according to an embodiment may identify a second palm position, a second position of the pen device 205, second tilt information of the pen device 205, and a second screen state of the display 260, based on the identification of the movement of the pen device 205 from the first position to the second position. According to an embodiment, based on the second palm position, the second position of the pen device 205, the second tilt information of the pen device 205, and the second screen state, the processor 220 may identify a second area, which is to be scanned by the touch sensing circuit 310, and a second scan exclusion area, which is not to be scanned by the pen input circuit 320. According to an embodiment, based on the identification of the second scan area and the second scan exclusion area, the processor 220 may control the touch sensing circuit 310 to perform a second partial scan in which the touch sensing circuit 310 scans the second scan area but does not scan the second scan exclusion area. The processor 220 according to an embodiment may control, based on identifying a hover-out state of the pen device 205, the touch sensing circuit 310 to perform a full scan.

According to an embodiment, a scanning method for touch sensing of a display in an electronic device (e.g., the electronic device 101 in FIG. 1 or the electronic device 201 in FIG. 3) may include an operation of identifying a first palm position on the display through a touch sensor circuit and identifying a hover-in state by a pen device via a pen input circuit. The method according to an embodiment may include an operation of identifying a first position of the pen device, first tilt information of the pen device, and a first screen state of the display, based on the identification of the first palm position and the hover-in state. The method according to an embodiment may include an operation of identifying a first scan area and a first scan exclusion area within a scan area to be scanned by the touch sensor circuit, based on the first palm position, the first position of the pen device, the first tilt information, and the first screen state. The method according to an embodiment may include an operation of performing, through the touch sensor circuit, a first partial scan in which the first scan area is scanned but the first scan exclusion area is not scanned.

The method according to an embodiment may further include an operation in which the touch sensor circuit performs a full scan of the scan area, based on identification of a hover-out state of the pen device.

The method according to an embodiment may include an operation of identifying a second hand position, a second position of the pen device, second tilt information of the pen device, and a second screen state of the display, based on identifying movement of the pen device from the first position to the second position on the display. The method according to an embodiment may include an operation of identifying a second scan area and a second scan exclusion area within a scan area to be scanned by the touch sensor circuit, based on the second palm position, the second position of the pen device, the second tilt information, and the second screen state. The method according to an embodiment may include an operation of performing, through the touch sensor circuit, a second partial scan in which the second scan area is scanned but the second scan exclusion area is not scanned.

In the method according to an embodiment, the first scan exclusion area and the second scan exclusion area may be different areas.

The method according to an embodiment may include an operation of identifying whether the display screen state is in a landscape state or a portrait state.

The method according to an embodiment may include an operation of identifying a leftward or rightward direction of the pen device relative to the x-axis of a display screen when the display screen state is the landscape state. The method according to an embodiment may include an operation of identifying the leftward or rightward direction of the pen device relative to the y-axis of the display screen when the display screen state is the portrait state.

In the method according to an embodiment, the tilt information may include an angle between a reference axis of the pen device and a vertical axis of the display screen.

The method according to an embodiment may include an operation of identifying the first scan exclusion area based on the leftward direction of the pen device when the angle is within a first specified angle range. The method according to an embodiment may include an operation of identifying the first scan exclusion area based on the rightward direction of the pen device when the angle is within a second specified angle range.

The method according to an embodiment may include an operation of transmitting, to the touch sensor circuit, a first indicator corresponding to the first scan exclusion area among indicators representing multiple areas within the display screen stored in the memory.

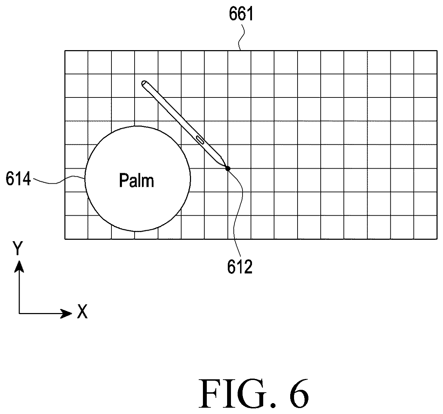

FIG. 6 illustrates a palm position on a display screen of an electronic device and a position of a pen device according to an embodiment.

Referring to FIG. 6, a processor (the processor 120 in FIG. 1 or the processor 220 in FIG. 2) of an electronic device (e.g., the electronic device 101 in FIG. 1 or the electronic device 201 in FIG. 2) according to an embodiment may represent a position on a display 661 by using x and y coordinates, with the horizontal axis of the display 661 (or a display screen or the entire scan area) set as the x-axis and the vertical axis set as the y-axis.

According to an embodiment, the processor 220 may identify a first scan area, which is to be scanned by the touch sensor circuit 310, and a first scan exclusion area, which is not to be scanned by the touch sensor circuit 310, within the entire scan area 661, based on a first palm position 614 and a position (e.g., a first position) 612 of the pen device 205. For example, when the first palm position 614 exists to the left of the first position 612 of the pen device 205 and tilt information of the pen device 205 includes an angle at which the pen device 205 is tilted to the left (e.g., within a second specified angle range (e.g., between approximately 0 degrees and +90 degrees (or -90 degrees))), it is highly likely that a user is left-handed. Therefore, the processor 220 may identify (or determine) the first scan exclusion area, which is not to be scanned by the touch sensor circuit 310, as an area located to the right of the first position 612 of the pen device 205. Although not illustrated, when the first palm position 614 exists to the right of the first position of the pen device 205 and the tilt information of the pen device 205 includes an angle at which the pen device 205 is tilted to the right (e.g., within a first specified angle range (e.g., between approximately 0 degrees and approximately -90 degrees (or approximately +90 degrees)) (not shown), it is highly likely that a user is right-handed. Therefore, the processor 220 may identify (or determine) the first scan exclusion area, which is not scanned by the touch sensor circuit 310, as an area located to the left of the first position 612 of the pen device 205.

FIG. 7A illustrates tilt information of a pen device in an electronic device according to an embodiment.

Referring to FIG. 7A, the tilt information of the pen device according to an embodiment may include an angle T between a reference axis (a) of the pen device 205 (or a longitudinal axis of the pen device 205) and the z-axis (or vertical axis) of the display 661 (xy plane). The tilt information of the pen device 205 according to an embodiment may have a second specified angle range (e.g., between approximately 0 degrees and +90 degrees (or -90 degrees)) when the pen device 205 is tilted to the left relative to the z-axis, and may have a first specified angle range (e.g., from approximately 0 degrees to approximately -90 degrees (or approximately +90 degrees)) when the pen device 205 is tilted to the right relative to the z-axis.

FIG. 7B illustrates a case in which a pen device has vertically approached an electronic device according to an embodiment.

Referring to FIG. 7B, a magnetic field may be formed below the display 661 (or the pen sensing panel 322) according to an embodiment. When the pen device 205 approaches the magnetic field, an electromagnetic wave 750 may be formed between the display 661 and the pen device 205 by a coil 710 inside the pen device 205. According to an embodiment, the intensity (or density) of the electromagnetic wave 750 may be highest at the point where the distance between the pen device 205 and the display 661 is smallest, and the intensity (or density) of the formed electromagnetic wave 750 may decrease as the distance between the pen device 205 and the display 661 increases.

A processor (the processor 120 in FIG. 1 or the processor 220 in FIG. 2) of an electronic device (e.g., the electronic device 101 in FIG. 1, or the electronic device 201 in FIG. 2) according to an embodiment may detect an electromagnetic wave 750 formed by the pen device 205 through the pen sensing panel 322 and identify an intensity distribution (or shape) 755 of the detected electromagnetic wave 750. According to an embodiment, when the identified intensity distribution 755 of the electromagnetic wave indicates concentric circles, the processor 220 may identify that the pen device 205 has approached vertically (e.g., in a state where tilt information is approximately 0).

FIG. 7C illustrates a case in which a pen device has approached an electronic device while being tilted to the left according to an embodiment.

Referring to FIGS. 7A and 7C, a magnetic field may be formed below the display 661 (or the pen sensing panel 322) according to an embodiment, and when the pen device 205 approaches the magnetic field, an electromagnetic wave 750 may be formed between the display 661 and the pen device 205 by the coil 710 inside the pen device 205. According to an embodiment, the intensity (or density) of the electromagnetic wave 750 may be highest at the point where the distance between the pen device 205 and the display 661 is smallest, and the intensity (or density) of the formed electromagnetic wave 750 may decrease as the distance between the pen device 205 and the display 661 increases.

A processor (the processor 120 in FIG. 1 or the processor 220 in FIG. 2) of an electronic device (e.g., the electronic device 101 in FIG. 1 or the electronic device 201 in FIG. 2) according to an embodiment may detect the electromagnetic wave 750 through the pen sensing panel 322 and identify an intensity distribution (or shape) 757 of the detected electromagnetic wave. According to an embodiment, when the identified intensity distribution 757 of the electromagnetic wave indicates an ellipse elongated to the right, the processor 220 may identify that the pen device 205 has approached while being tilted to the left (e.g., in a state in which tilt information is approximately +20 degrees or within a second specified angle range (e.g., from approximately 0 degrees to approximately +90 degrees)).

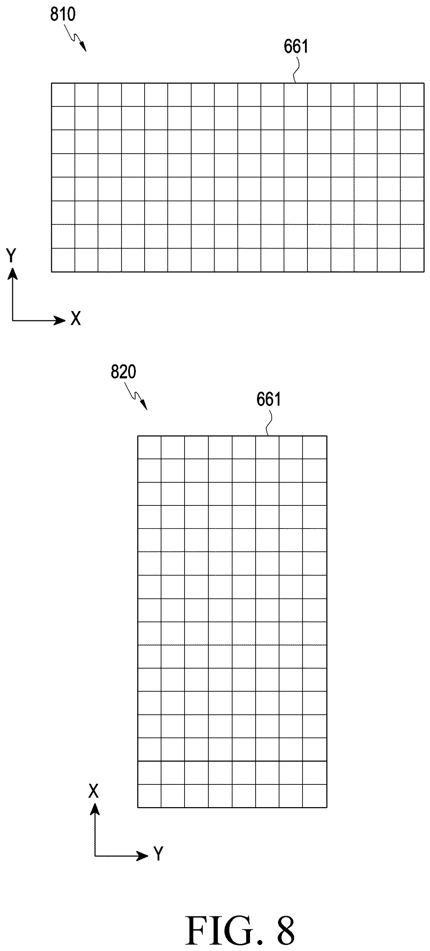

FIG. 8 illustrates the landscape state and portrait state of a display according to an embodiment.

Referring to FIG. 8, a processor (the processor 120 in FIG. 1 or the processor 220 in FIG. 2) of an electronic device (e.g., the electronic device 101 in FIG. 1 or the electronic device 201 in FIG. 2) according to an embodiment may display a display screen 661 in either a landscape state or a portrait state, depending on the rotational state of the electronic device 201.

The processor 220 according to an embodiment may identify a leftward or rightward direction of a first position of the pen device 205 with respect to the x-axis of the display screen 661 when the display screen state is a landscape state 810. The processor 220 according to an embodiment may identify the leftward or rightward direction of the pen device 205 with respect to the y-axis of the display screen 661 when the display screen state is in a portrait state 820. In the landscape state and the portrait state according to an embodiment, the landscape may become the portrait or the portrait may become the landscape, depending on the definition of the landscape and portrait of the display screen.

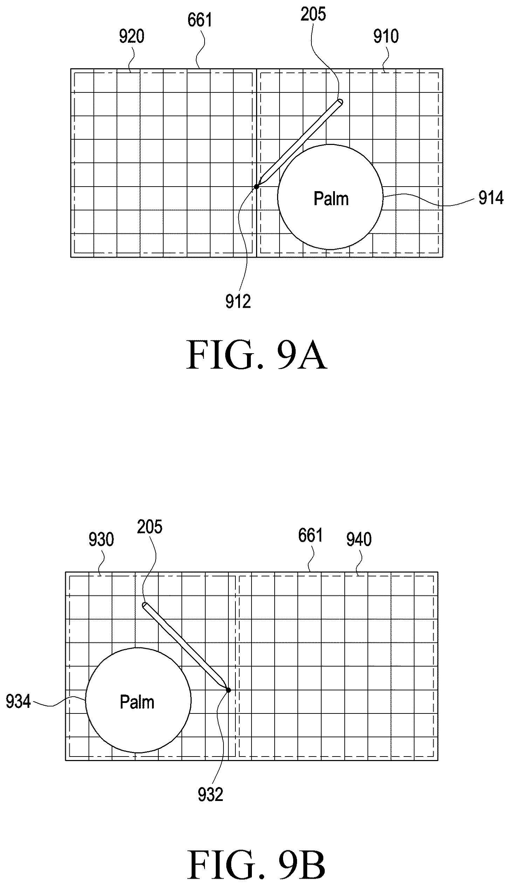

FIG. 9A illustrates a scan area and a scan exclusion area when a user writes with the right hand while a display is in a landscape state according to an embodiment.

Referring to FIG. 9A, a processor (the processor 120 in FIG. 1 or the processor 220 in FIG. 2) of an electronic device (e.g., the electronic device 101 in FIG. 1 or electronic device 201 in FIG. 2) according to an embodiment, when the pen device 205 is at a first position 912 while a first palm position (e.g., a palm position) 914 is identified, and when first tilt information of the pen device 205 indicates a right-tilted state while the screen state of the pen device 205 is a landscape state, may identify an area corresponding to the leftward direction of the first position 912 of the pen device 205 relative to the x-axis of the display screen 661 as a first scan area 920, and identify an area other than the first scan area 920 as a first scan exclusion area 910.

FIG. 9B illustrates a scan area and a scan exclusion area when a user writes with the left hand while a display is in a landscape state according to an embodiment.

Referring to FIG. 9B, a processor (the processor 120 in FIG. 1 or the processor 220 in FIG. 2) of an electronic device (e.g., the electronic device 101 in FIG. 1 or the electronic device 201 in FIG. 2) according to an embodiment, when the pen device 205 is at a first position 932 while a first palm position 934 is identified, and when first tilt information of the pen device 205 indicates a left-tilted state while the screen state of the pen device 205 is a landscape state, may identify an area corresponding to the rightward direction of the first position 932 of the pen device 205 relative to the x-axis of the display screen 661 as a first scan area 940, and identify an area other than the first scan area 940 as a first scan exclusion area 930.

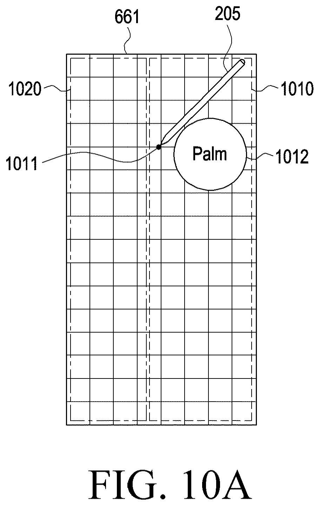

FIG. 10A illustrates a scan area and a scan exclusion area when a user writes with the right hand while a display is in a portrait state according to an embodiment.

Referring to FIG. 10A, a processor (the processor 120 in FIG. 1 or the processor 220 in FIG. 2) of an electronic device (e.g., the electronic device 101 in FIG. 1 or the electronic device 201 in FIG. 2) according to an embodiment, when the pen device 205 is at a first position 1011 while a first palm position 1012 is identified, and when first tilt information of the pen device 205 indicates a right-tilted state while the screen state of the pen device 205 is a portrait state, may identify an area corresponding to the leftward direction of the first position 1011 of the pen device 205 relative to the y-axis of the display screen 661 as a first scan area 1020, and identify an area other than the first scan area 1020 as a first scan exclusion area 1010.

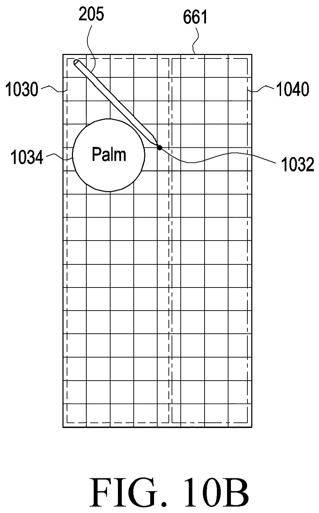

FIG. 10B illustrates a scan area and a scan exclusion area when a user writes with the left hand while a display is in a portrait state according to an embodiment.

Referring to FIG. 10B, a processor (the processor 120 in FIG. 1 or the processor 220 in FIG. 2) of an electronic device (e.g., the electronic device 101 in FIG. 1 or the electronic device 201 in FIG. 2) according to an embodiment, when the pen device 205 is at a first position 1032 while a first palm position 1034 is identified, and when first tilt information of the pen device 205 indicates a left-tilted state while the screen state of the pen device 205 is a portrait state, may identify an area corresponding to the rightward direction of the first position 1032 of the pen device 205 relative to the y-axis of the display screen 661 as a first scan area 1040, and identify an area other than the first scan area 1040 as a first scan exclusion area 1030.

A processor (the processor 120 in FIG. 1 or the processor 220 in FIG. 2) of an electronic device (e.g., the electronic device 101 in FIG. 1, or the electronic device 201 in FIG. 2) according to an embodiment may divide a scan area and a scan exclusion area into various areas in addition to the areas described above. For example, the processor 220 may divide the display screen 661 into more than two areas, and select (or identify) at least one or multiple scan exclusion areas from among the more than two areas, excluding the scan area.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, a non-transitory storage medium may store instructions that are configured to, when executed by an electronic device, cause the electronic device to perform at least one operation, wherein the at least one operation includes an operation of identifying a first palm position on a display through a touch sensor circuit and identifying a hover-in state by a pen device via a pen input circuit, an operation of identifying a first position of the pen device, first tilt information of the pen device, and a first screen state of the display, based on the identification of the first palm position and the hover-in state, an operation of identifying a first scan area and a first scan exclusion area within a scan area to be scanned by the pen input circuit, based on the first palm position, the first position of the pen device, the first tilt information, and the first screen state, and an operation of performing, through the pen input circuit, a first partial scan in which the first scan area is scanned and the first scan exclusion area is not scanned.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 201) comprising:
a display including a touch sensor circuit (310) and a pen input circuit (320);
memory (130, 230) storing instructions; and
a processor (120, 220),
wherein the instructions, when executed by the processor, cause the electronic device to:
identify a first palm position on the display through the touch sensor circuit and identify a hover-in state by a pen device through the pen input circuit,
identify a first position of the pen device, first tilt information of the pen device, and a first screen state of the display based on the identifying of the first palm position and the hover-in state,
identify a first scan area to be scanned by the touch sensor circuit and a first scan exclusion area not to be scanned by the touch sensor circuit based on the first palm position, the first position of the pen device, the first tilt information, and the first screen state, and
control the touch sensor circuit to perform a first partial scan to scan the first scan area and not to scan the first scan exclusion area.

2. The electronic device of claim 1,
wherein the instructions, when executed by the processor, cause the electronic device to:
control the touch sensor circuit to perform a full scan based on identifying a hover-out state of the pen device.

3. The electronic device of claim 1 or 2,
wherein the instructions, when executed by the processor, cause the electronic device to:
based on identifying movement of the pen device from the first position to a second position, identify a second palm position, the second position of the pen device, second tilt information of the pen device, and a second screen state of the display;
identify a second scan area to be scanned by the touch sensor circuit and a second scan exclusion area not to be scanned by the touch sensor circuit based on the second palm position, the second position of the pen device, the second tilt information, and the second screen state, and
control the touch sensor circuit to perform a second partial scan to scan the second scan area and not to scan the second scan exclusion area.

4. The electronic device of any one of claims 1 to 3,
wherein the first scan exclusion area and the second scan exclusion area are different areas.

5. The electronic device of any one of claims 1 to 4,
wherein the first display screen state is a vertical state or a horizontal state.

6. The electronic device of any one of claims 1 to 5,
wherein the instructions, when executed by the processor, cause the electronic device to:
identify a left direction or a right direction of the first position of the pen device with respect to an x-axis of the display when the first display screen state is the vertical state, and
identify the left direction or the right direction of the first position of the pen device with respect to the y-axis of the display when the first display screen state is the horizontal state.

7. The electronic device of any one of claims 1 to 6
wherein the tilt information includes an angle between a reference axis of the pen device and a vertical axis of the display.

8. The electronic device of any one of claims 1 to 8,
wherein the instructions, when executed by the processor, cause the electronic device to:
identify the first scan exclusion area based on the left direction of the first position of the pen device when the angle is within a first specified angle range, and
identify the first scan exclusion area based on the right direction of the first position of the pen device when the angle is within a second specified angle range.

9. The electronic device of any one of claims 1 to 8,
wherein the memory configured to store indicators indicating each of a plurality of areas within touch sensing area by the touch sensor circuit.

10. The electronic device of any one of claims 1 to 9,
wherein the instructions, when executed by the processor, cause the electronic device to:
transmit a first indicator corresponding to the first scan exclusion area among the area indicators to the touch sensor circuit.

11. A scanning method for touch sensing of a display in an electronic device (101 or 201), the method comprising:
identifying a first palm position on the display through a touch sensor circuit and identifying a hover-in state by a pen device through a pen input circuit;
based on identifying the first palm position and the hover-in state, identifying a first position of the pen device, first tilt information of the pen device, and a first screen state of the display;
based on the first palm position, the first position of the pen device, the first tilt information, and the first screen state, identifying a first scan area and a first scan exclusion area from a scan area to be scanned by the touch sensor circuit; and
performing, through the touch sensor circuit, a first partial scan in which the first scan area is scanned and the first scan exclusion area is not scanned..

12. The method of claim 11, comprising, based on identifying a hover-out state of the pen device, performing a full scan of the scan area by the touch sensor circuit.

13. The method of claim 11 or 12, comprising:
based on identifying movement of the pen device from the first position to the second position on the display, identifying a second hand position, a second position of the pen device, second tilt information of the pen device, and a second screen state of the display,;
based on the second palm position, the second position of the pen device, the second tilt information, and the second screen state, identifying a second scan area and a second scan exclusion area from a scan area to be scanned by the touch sensor circuit; and
performing, through the touch sensor circuit, a second partial scan in which the second scan area is scanned and the second scan exclusion area is not scanned.

14. The method of one of claims 11 to 13, wherein the first scan exclusion area and the second scan exclusion area are different areas, and
wherein the method comprises identifying whether the display screen state is a landscape state or a portrait state.

15. A non-transitory storage medium storing instructions that are configured to, when executed by an electronic device, cause the electronic device to perform at least one operation, wherein the at least one operation comprises:
identifying a first palm position on a display through a touch sensor circuit and identifying a hover-in state by a pen device through a pen input circuit;
based on identifying the first palm position and the hover-in state, identifying a first position of the pen device, first tilt information of the pen device, and a first screen state of the display;
based on the first palm position, the first position of the pen device, the first tilt information, and the first screen state, identifying a first scan area and a first scan exclusion area within a scan area to be scanned by the touch sensor circuit; and
performing, through the touch sensor circuit, a first partial scan in which the first scan area is scanned and the first scan exclusion area is not scanned..
